# EUROPEAN PATENT SPECIFICATION

(11) **EP 3 956 080 B1**
(45) Date of publication and mention of the grant of the patent: **10.06.2026**
(21) Application number: 20727865.6
(22) Date of filing: 17.04.2020
(51) Int. Cl.: B09B 3/00, B02C 18/00, B29B 17/04, B65F 1/00, B65F 1/08, B65F 7/00

(54) **DEVICE FOR THE COMPLETE TREATMENT AND RECOVERY OF SOLID URBAN WASTE**
VORRICHTUNG ZUR VOLLSTÄNDIGER BEHANDLUNG UND VERWERTUNG VON FESTEN STÄDTISCHEN ABFÄLLEN.
APPAREIL POUR LE TRAITEMENT COMPLET ET LA VALORISATION DES DÉCHETS URBAINS SOLIDES.

(30) Priority: 19.04.2019 IT 201900006174
(43) Date of publication of application: 23.02.2022
(73) Proprietor: Savino, Andrea, 33080 Roveredo in Piano (PN) (IT)
(72) Inventor: Savino, Andrea, 33080 Roveredo in Piano (PN) (IT)
(74) Representative: Petraz, Gilberto Luigi
(86) International application number: PCT/IT2020/050098
(87) International publication number: WO 2020/213020

(56) References cited:
- WO-A1-94/06576
- CN-A- 104 399 739
- DE-A1- 10 108 495
- ES-A1- 2 455 916
- GB-A- 2 485 014

## Description

The present invention relates to an innovative device for domestic use for the complete treatment of solid urban waste, also defined as domestic such as: dry, glass, cans (aluminum or other), plastic and wet. Said device being basically defined by two basic characteristics, namely: the first which is that of being able to be contained in a standard piece of furniture, for example those of a common kitchen, or having the dimensions equal to those of a commonly used household appliance; the second is to treat waste in a fine and complete way bringing it from its initial state, such as that of bottles, cans, etc., whole, or wet (bones, pieces of vegetables, etc.), as a refusal of discarded foods , to that of a fine powder of the materials that make them up, powder which is furthermore clean and refined as a result of suitable processing cycles better described below, nevertheless, in the case of the wet, the final result of the treatment will be a ready-to-use potting soil for growing indoor plants, etc.

Furthermore, this device will allow for less waste of treated waste to be sent to the bins currently used for the collection of the same waste, it will not give out any nauseating odors from the collection bins on the street, due to fermentations and/or decomposition of the organic substances that may be present there because treatment cycles will have totally eliminated any type of organic substances leaving the materials, such as plastics, aluminum- cans, glass, dry, etc., completely free of any organic trace and, practically pure in their initial composition, even for the wet, the organic materials will have treatments similar to those of the other materials previously exposed, which will bring it (the damp) to a state of humus, or fertile soil for the cultivation of houseplants, or the like. The treatment cycles will be practically the same for each type of waste, i.e. there will be shredding in different stages, washing with detergent liquids, or enzymes dissolved in water, drying after washing and further shredding and washing treatments combined with further stages of drying which will lead to the final result of obtaining very fine powders, in the order of a few millimeters of grain size, clean, free of any type of pollutant, dry and ready for transfer to the suitable collection bin.

In addition, the use of this appliance, which is in all respects a device for the treatment of waste, connected to the water and sewage network and to the electricity network in order to function, like any dishwasher or washing machine, will allow to be able to confer the refusal treated only once a week in the case of an average family with consequent less discomfort and that the transfer will no longer be of foul-smelling material, which gives possible losses of leaks due to the disgusting smell and consistency, but it will be all clean, odorless, in dust and the bins to collect them, on the street, will also be free of nauseating odors, and any parasitic presences that live in that environment stimulated by a "dirt" which in the present case is completely eliminated.

For example, DE-A1-10108495 discloses a device for treating solid waste, having the dimension of a standard built-in appliance and suitable to treat biological waste comprising a first compartment with an upper opening closed with a cap connected with safety sensors, a shredding device placed below the first compartment, a slurry tank and an enzymatic liquid injection tank with a metering device. This device also comprises an intermediate tank placed between a separation device and a feed device, and containing enzymes and/or bacteria mixed into water, so that the separation device is not actuated directly by the feed device. Such device of the prior art fails to disclose a second extractable chamber for storage of shredded/treated waste from the first chamber, a heating means, a fan, a filter and an aspirator all connected together by pipes, a second and a third compartment each connected to the first compartment, wherein the second compartment is a drying compartment and the third compartment is for sanitation and washing of the waste material to be treated, so as to be able to carry out the entire treatment of the waste in a single compartment and a heat pump in the second compartment.

WO-A1-94/06576 describes a method and an apparatus for disposing organic waste but fails to show a second drying compartment provided with a heat pump and connected, respectively by means of a first and a second tube, with the compartment wherein the waste is fed and shredded, and also fails to show a third compartment that has the function, on the one hand, to feed enzymes and a washing liquid in the treatment compartment and, on the other hand, to discharge the liquid part from the waste at the end of the treatment.

Various systems of treatment, recycling and recovery of materials generated by domestic waste, also called municipal solid waste, are commonly known and no less widely used.

They have the advantage of decreasing the mass and volume of all existing types of waste, but also have significant negative sides, that is, for example, they have the prerogative to force the user to leave bags, baskets on the street on different days of the week , or waste containers in the different existing types and classified by the various waste treatment and collection organizations and by the municipalities themselves. Said known systems entail, besides there being a real and proper continuous movement from home to the street, the possibility that animals, insects, parasites, etc., attack the waste conferred on the street, or in the appropriate bins, to which must be added the fact that , the organic substances that remain in these wastes, can degrade, decompose, ferment, etc., giving disgusting odors and generating leaps and rots of various kinds that disturb people, attract animals and insects and also cause possible areas at risk of transmitted infections from insects and/or even stray animals, moreover they remain more or less bulky while in the device in question the residual volume is less than 5% of the original.

In conclusion, the current systems and also the systems patented by other inventors and, nevertheless, examined by the author of this industrial property right, are, yes, effective, but only for one or more wastes, but not in their entirety, or specifically, they always have shortcomings in the treatment of the waste itself, they do not give a final configuration of the waste that can be assimilated to an "inert" element, as in the case of the element constituted by the device for the treatment of waste object of the present invention , which also has the fundamental characteristic of being able to be recessed in a standardized piece of furniture such as a modular kitchen unit and therefore practically becoming a built-in appliance (dishwasher type) in all respects, but always have shortcomings that lead to unpleasant consequences allround, that is, from the point of view of the unpleasant smell, of the multiple shifts of collection and differentiation, etc., which, it is repeated, the present invention totally avoids defining also a new type of waste collection and treatment which can, without a shadow of a doubt, be considered as a third characteristic of the novelty of the present invention.

In fact, with the system defined by the device object of the present invention, the method of collection, treatment, possible reuse of the waste will be completely revolutionized, that is, there will no longer be foul-smelling bins into which the entire waste will flow, such as bottles, cans, etc., contained in bags, wastes that will have organic traces that will generate, decomposing, foul-smelling and leachate residues of various types, but the waste will be treated, inert, in special bins that will never be foul-smelling, which will be of a volumetrically small quantity compared to the initial waste, clean and free of any possible organic trace, ready and divided into categories for direct recycling.

From this we will have that the treated waste will decrease their volume by 90/95%, this will allow to be able to decrease the deposits in the street, or in the bins several times a week at once, to be able to bring waste already treated and ready in order to be reused as recycled material and not least the streets will be cleaner, free of disgusting odors due to degradation of organic substances and the collection service of the municipality and / or those that are specialized companies will take place less frequently, with significant savings for the community, benefits for the municipality, or for the municipalized companies, or waste collection and treatment companies which may also have economic profits due to the resale of the material ready for recycling as the waste will already be treated and transferred for category ready for final recycling.

We do not elaborate further on descriptions of the state of the art, or on the defects and limitations to which the current collection systems are subject as they are known to the average technician and also to the citizen who is in any case not expert on this topic and we will then proceed to an examination and description of the invention, which is the only one that can be assimilated to a commonly used household appliance (e.g. dishwasher), which can be built-in in a common kitchen, fully automated, with a complete cycle of the treatment of household waste such as dry, cans, plastic, glass, wet; the treatment of paper and cardboard is not considered as the current delivery system can be considered acceptable. The object of the present invention is to overcome all the drawbacks and limitations, defects and in general to all the problems of waste management and this is achieved with the complete treatment device of the waste in question which primarily eliminates the formation of odors unpleasant due to degradation of the organic residues present in the waste, it also decreases the volume of the original mass of the treated waste by 90/95%, reducing it to a powder of discrete grain size, nevertheless the device has the dimensions of any household appliance and therefore is recessed inside a home kitchen.

The invention is identified in claim 1. Further embodiments of the invention are set out in the dependent claims.

In order to better understand the characteristics and advantages presented by the device object of the present invention, as well as its utilization and application advantages, all of which is provided by way of non-limiting example only and will be described below with reference to the attached drawings in which:
- Figure 1 is a perspective view of the device indicated with a marked line, illustrating the same device, the upper closing shelf and the entire plan for programming the waste treatment cycles with the respective nozzles referring to the individual waste, while the thinner lines they will indicate the furniture it joins to form one of the elements of a possible furniture composition, for example a kitchen, all for a perfect built-in and paneling;
- Figures 2, 3 and 4 are respectively plan, front and side views of the device object of the invention;
- Figure 5 illustrates the processing plane of the device in which the general control display, the various control elements dedicated to each single type of waste and the waste insertion openings with the respective closing covers, or caps are highlighted;
- Figure 6 will be a view according to section I-I of figure 2;
- Figure 7 will be yet another view according to section II-II of figure 2 placed below the section of the previous figure 6;
- Figure 8 will be a following sectioned view according to section III-III of figure 2 still placed below the previous section of figure 7;
- Figure 9 will be a view according to section IV-IV of figure 4;
- Figure 10 will be a view according to the section V-V of figure 4;
- Figures 11 and 12 will be a sectioned view according to section VI-VI and VII -VI I of figure 2;
- Figure 13 is a schematic view of the components of the device in order to give the sense and the arrangement of the same and facilitate the understanding of the waste treatment cycles;
- Figure 14 is a block diagram of the various stages of operation and implementation of the various components for carrying out the complete treatment cycles;
- Figure 15 is a view of the device with lid and panels open;
- Figure 16 is a view which highlights the complete integration of the device (household appliance) in a modular kitchen preferably positioned on the side of the sink.

It should be noted that the common details will be recalled with the same numerical or literal references.

We will then proceed to describe the device object of the present invention, however some clarifications will have to be made, that is to say, in order to give a sort of "legend ", which recalls them with precision, the names of the various components used for the construction of the said device, namely:
- TPS cap for dry treatment unit;
- TPL cap for can treatment unit;
- TPP plastic treatment unit cap;
- TPV glass treatment unit cap;
- TPU cap wet treatment unit;
- MN handle for emptying and/or transporting the waste compartment;
- LCD screen central processing and control unit;
- CPU central processing and control unit;
- CPC Operating commands and control LEDS;
- VR primary compartment for reduction / treatment of waste to be treated;
- SR secondary compartment for treated waste storage (removable);
- MD digital motor;
- A1 waste air extractor fan;
- A2 filter suction unit F2;
- GV ejection grill;
- PD metering pump (water + enzymes);
- V fan;
- PDC heat pump;
- F1 activated carbon filter;
- F2 activated carbon filter;
- SLE enzyme liquid tank;
- SLQ treated liquid tank;
- P1 liquid pump / extractor;
- P2 liquid pump / extractor;
- AT actuator;
- EV solenoid valve;
- TADE enzyme dispenser feeding tube;
- TADA water doser feeding tube;
- TA suction tube;
- TV ventilation tube;
- TAE ventilation tube;
- TPD dosing pump tube;
- THIS liquid suction hose;
- TAF filter suction tube;
- TVSLQ ventilation tube for treated liquid tank;
- TSLF liquid drain pipe filters;
- TSLPDC heat pump liquid drain hose;
- TSLQ liquid tank drain pipe to sewer;
- SUCH enzyme feeding tube;
- TALQ liquid feeding tube;
- PR pressure switch;
- ILE enzyme level indicator;
- ILLQ liquid level indicator;
- IATP overflow indicator/alarm;
- ICT cap closure indicator;
- ILSR waste tank level indicator;
- ICSR waste tank closing indicator;

It should be noted that, as explained above, the common details will be recalled with the same numerical and / or literal references, but that some details, such as, for example TP plugs, the VR compartments defined as the primary compartment for reducing / treating waste to be treated , in their identification, in the drawings, they will have other literal elements such as: TPP to indicate that the cap TP is for plastic P, or the compartment VRP to indicate that the compartment VR is the compartment for plastic P, and so on for all the other materials to be treated. Furthermore, in common and general cases of the use of the device D, they will be indicated simply with the term TP cap, VR compartment, etc., without affecting the sense of the description.

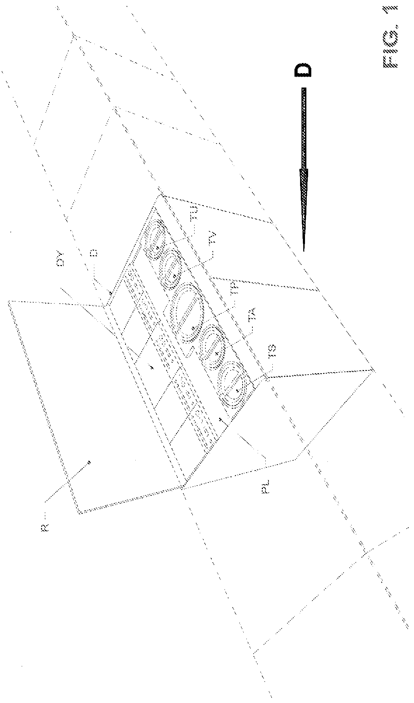

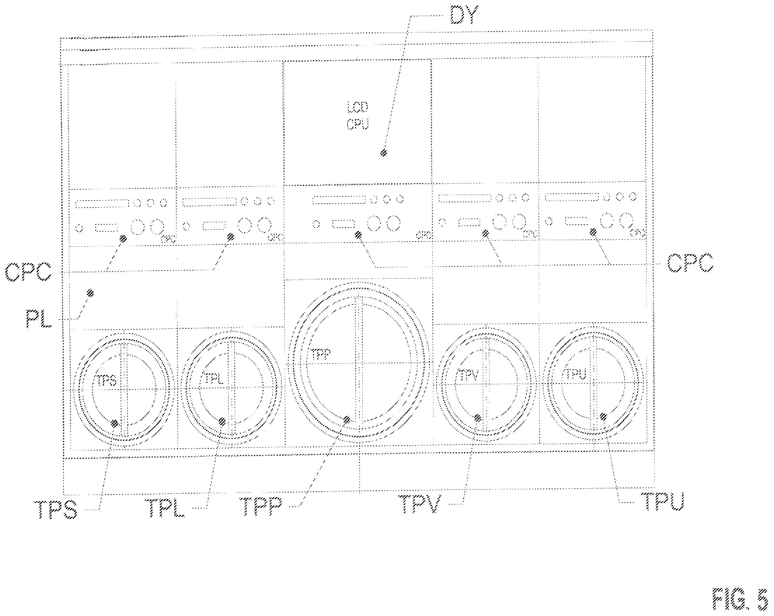

With reference to figure 1 and figure 5, a complete device D will be noted, indicated with a marked line and inserted in the furniture composition which is indicated with a thin line, it will have a covering shelf R which will cover the work surface PL of said device D. On the work surface PL there will be an LCD display, of general command (DY) of said device D, the led operating commands and CPC control and the various plugs TPV, TPP, etc., of the VR primary compartments of reduction / treatment of waste to be treated which is for the charge of the waste to be treated.

From the aforementioned figure 1 it will be noted that the device D will be inserted in a kitchenlike furnishing composition, like any household appliance, in addition it will have a cover shelf R hinged in its rear part (D), the shelf will preferably be made of glass, crystal in order to have a continuous and easy plane for cleaning and work, but which allows the luminous LEDs of cycle operation to be glimpsed, on the PL plane there will be the LCD display, the TP caps, the individual LED operation and control commands CPC of each processing station defined by the TPV, TPP, etc. caps, that is to say in all respects (D) similar to a commonly used household appliance, with an upper closing shelf that will level off on the remaining floor of the kitchen without continuity solution; its ideal position is in adherence to the sink to optimize: drain, water and electricity supply with the same connections as for a dishwasher.

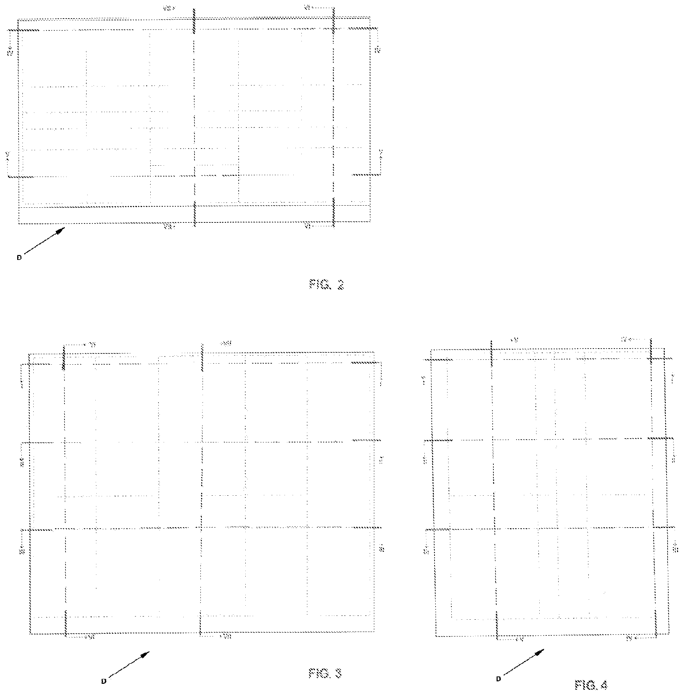

With reference to figures 2, 3 and 4, following, it will be noted that the device D will be precisely showing not only the dimensions of a kitchen appliance, but will also have, as an external aspect, the shape of a modular furniture with standard dimensions for the its positioning in a complex of modular furniture, its vertical front elements will be paneled so as to integrate perfectly into a modern modular kitchen, and the upper surface, perfectly flush with the kitchen surface to allow easy use and cleaning.

Furthermore, the following figures from 6 to 12 will illustrate, respectively, with views sectioned along the lines from I-I to VII-VII, all the components contained in the device D.

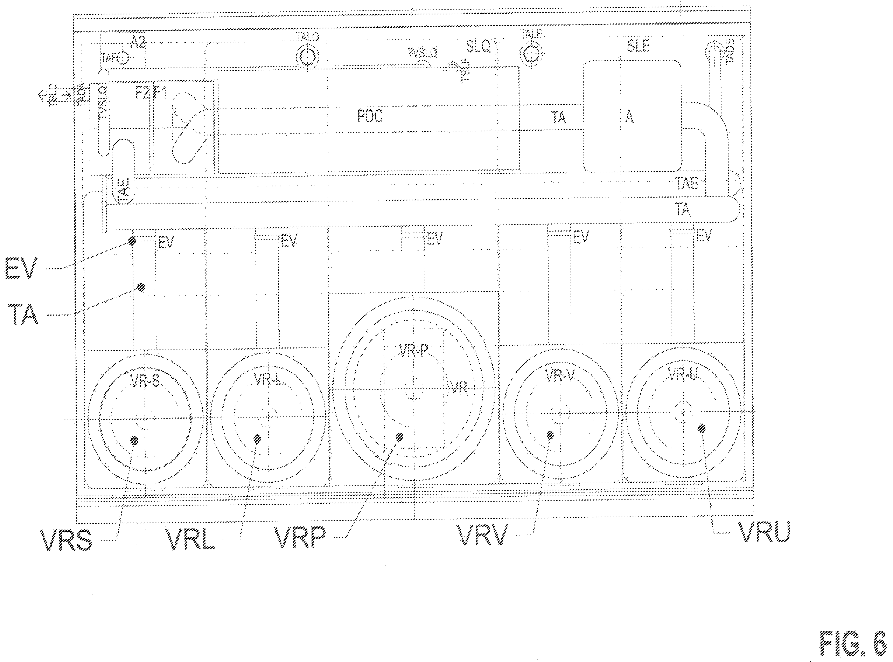

Precisely, figures 6, 7 and 8 will illustrate, with a sectioned view according to horizontal planes, or respectively according to sections I-I, II-II and III-III of figure 4, the components forming the treatment device D in question.

In particular, Figure 6 with its cross-sectional view along the line II, illustrate the primary compartments reduction / treatment of VR waste, or the VR-S compartments (Dry), VR-L (cans), VR-P (Plastic) , VR-V (Glass) and VR-U (Wet), connected in turn respectively to a suitable length of pipe TA which ends at its opposite end in a solenoid valve EV, for connection, always to the same suction pipe TA which it connects, in turn, with a wet waste air aspirator A1, going out and which in turn will join to another suction pipe TA projecting in the heat pump PDC, leaving it (PDC) and going to connect with the filter with activated carbon F1. Also in this figure 6 you will notice, from left to right in the representation, the liquid tank drain pipe to the sewer TSLQ, the TADA water metering feed tube, the activated carbon filter F2, the ventilation tube for liquids treated TVSLQ, the suction pipe TAF filter, aspirator A2 from filter F2, the TALQ liquid feeding tube, the SLQ treated liquid tank, the TALE enzyme feeding tube, the SLE enzyme liquid tank, the TADE enzyme feeding tube.

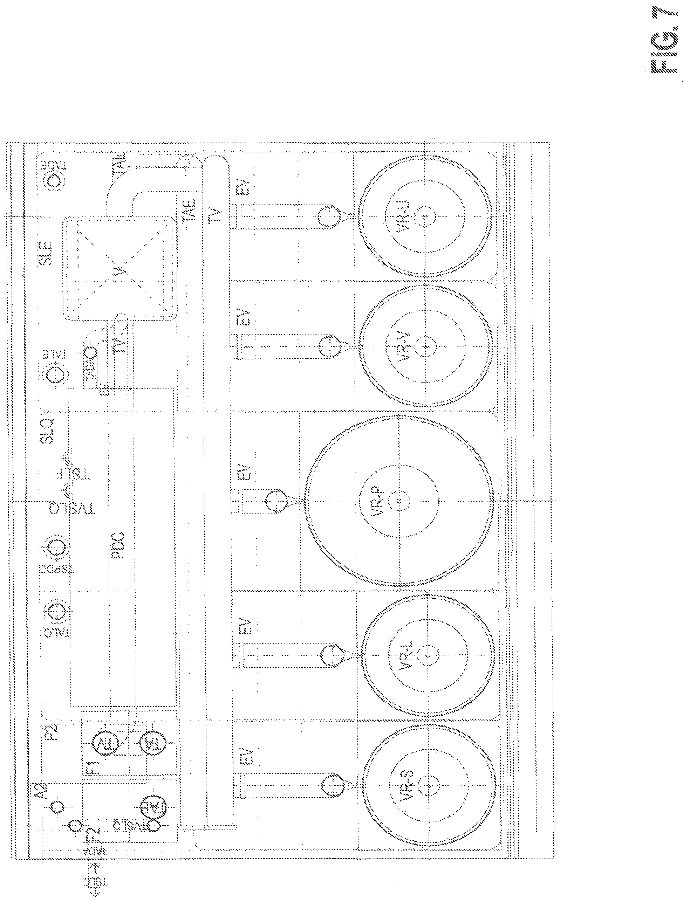

Figure 7 will show, with its sectioned view according to the line II-II of Figure 4, further elements making up the device D and other ones indicated, precisely, from left to right in the representation, or the TV ventilation tube, the fan V.

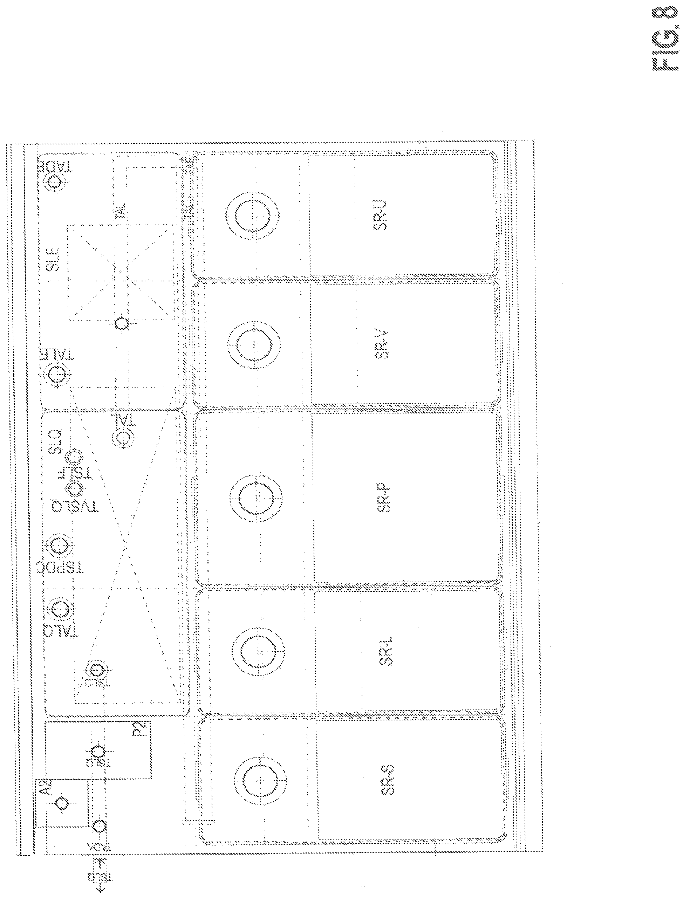

Figure 8 will show, according to section III-III of figure 4, the SR compartments (removable), more precisely: the secondary compartment for storing treated waste SR-S (Dry); the secondary compartment for SR-L treated waste (Cans), the secondary compartment for SR-P treated waste (Plastic), the secondary compartment for SR-V treated waste (Glass), the secondary compartment for SR-U treated waste (Wet).

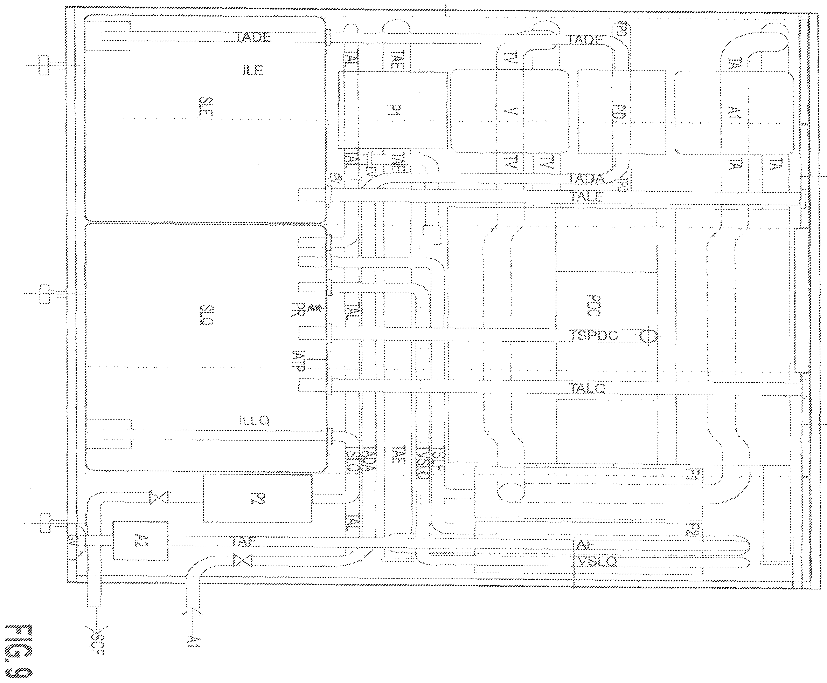

Figure 9 is a view according to section IV-IV of figure 2 and it shows the following elements described from right to left and from top to bottom, that is: the suction tube TA, the aspirator of wet air waste A1,the activated carbon filter F1 , the activated carbon filter F2, the TAF filter suction tube, the TVSLQ liquid tank ventilation tube, the TPD metering pump tube, the metering pump (water +enzymes) PD, the TADA water doser supply, TALE enzyme liquid feeding tube, PDC heat pump, TSPCD heat pump liquid discharge tube, TALQ liquid feeding tube, TV ventilation tube, V fan, TAE ventilation tube, the P1 pump/liquid extractor, the TSLF filter liquid discharge pipe, the TSLQ liquid tank drain pipe, the ILE enzyme level indicator, the SLE enzyme liquid tank, the SLQ treated liquid tank, the ILLQ liquid level indicator , L with pump / liquid extractor P2, the aspirator A2 by filter F2.

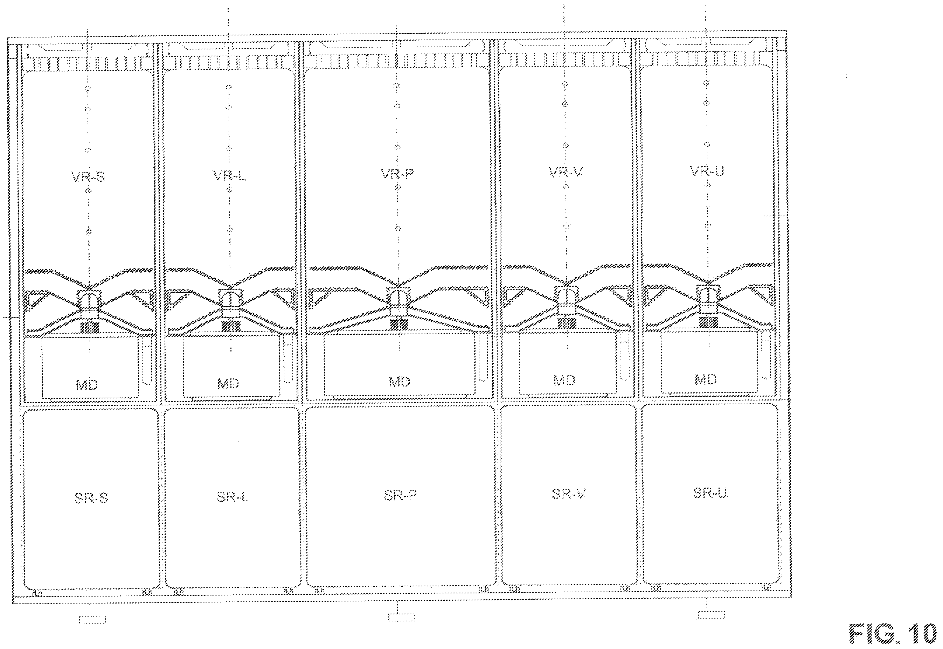

Figure 10 is a view according to the section V-V of Figure 2 which shows, starting from top to bottom and from left to right respectively sectioned the caps TP, precisely: TPS cap for the treatment unit, TPL cap for the treatment unit for cans, TPP plastic treatment unit cap, TPV glass treatment unit cap, TPU wet treatment unit cap, which project respectively in the respective primary reduction/treatment compartments for waste to be treated VR, precisely TPS in VR-S (dry), TPL in VR-L (Cans), and so on until the last one which is wet. Under each of the compartments VR-S, VR-L, etc., MD digital motors will be placed, and under them there will be the compartments SR, or the secondary compartments for the storage of waste treated respectively for the dry SR-S, for the cans SR-L, for the plastic SR-P, for the glass SR-V and for the wet SR-U, all removable.

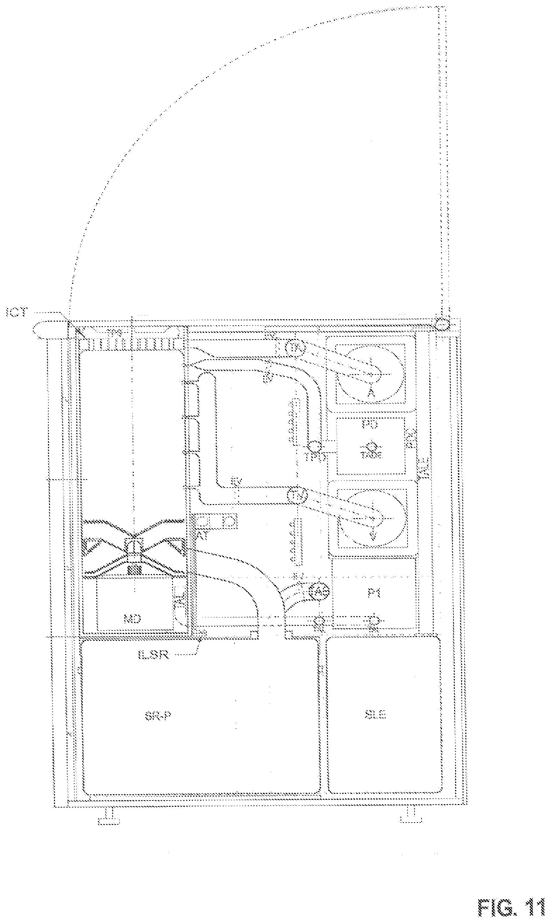

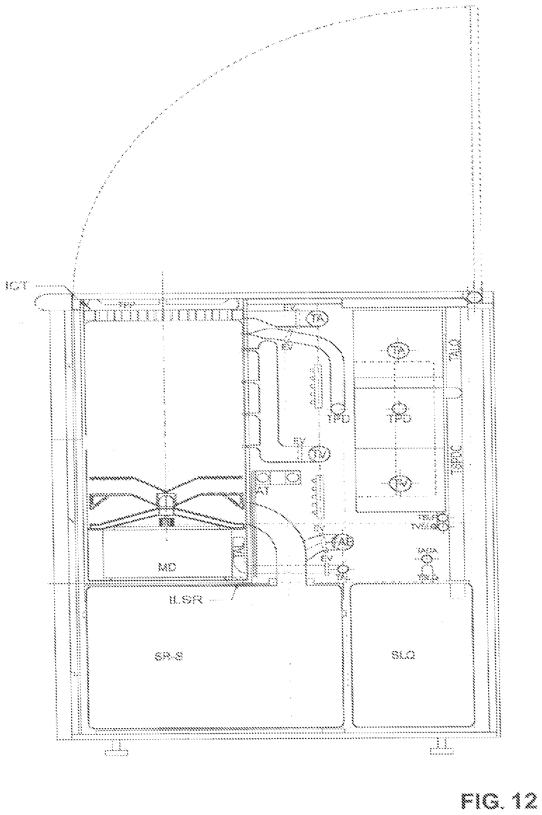

Figures 11 and 12 are respectively, the first, a view according to section VI-VI of figure 3 and the second, a view according to section VII-VII, always of figure 3, both of which are said figures illustrating the components of the device D which have already been listed and described in the previous figures.

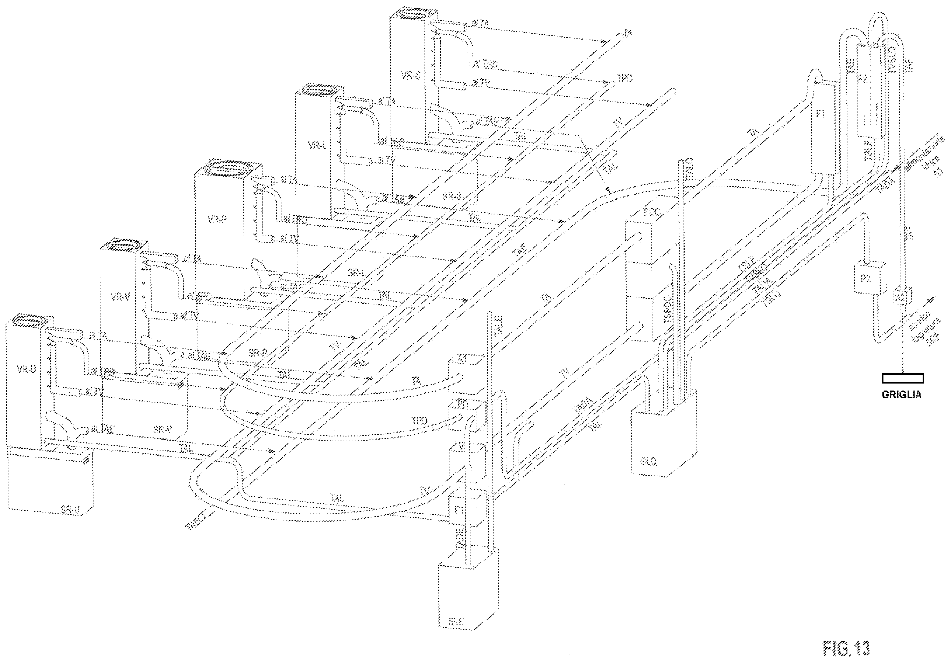

Once the summary description of the particular main elements that make up the device D has been completed, we will proceed to describe, with reference, in particular, to figure 13, what are two essential characteristics of the device, namely:

### 1) Mode of operation of device D and its waste treatment cycle.

### Premise:

- In each individual treatment compartment consisting of a primary compartment for reducing/ treating waste to be treated VR and a secondary compartment for storing SR treated waste (removable) between which a digital MD motor is placed, albeit with the same types of elements shown above operating in the same way to treat waste (the only one different is that of plastic, but only in size), it works with the same types of processing, but with cycles, differentiated by treatment times and in the functionality of each single element based on to the refusal to be treated. For example, the glass will be treated with different times and cycles, with different enzymes more or less diluted and with different quantities of water, everything will be assessed case by case;
- It should be noted that start-up and operation are automated as well as the treatment cycle and is carried out by means of the start buttons on the LCD display, or by the CPC buttons provided for each individual type of treatment and material, furthermore the cycles can be partial, single, or complete (partial cycle ie treatment not performed totally of only one type of waste - single total treatment of only one type of waste - complete combined cycle, ie total treatment in succession of all waste); The dimensions of the compartments are calculated for the insertion of whole bottles-bottles, whole plastic containers, or manually pressed, boxes, whole cans, in order to facilitate insertion for normal domestic use.
- Description of operation and waste treatment cycles.
- The operator removes the generic TP cap and inserts the waste corresponding to it into the corresponding compartment VR, then closes the VR compartment with the TP cap, the device D is operated safely, by means of the ICT control sensor indicating the closure of the cap only with closed cap;
- The treatment cycle is then started via the DY display via the LCD screen for a complete combined cycle of treatment of all types of waste, or via the CPC operating commands and control LEDs, placed on the PL work surface, for a partial cycle, or for a single cycle.
- Then:
   1) there will be, inside the VR compartment, a first phase of coarse waste reduction treatment by means of the blades joined to the digital motor MD and injection of solute enzymes into water, coming from the SLE enzyme liquid tank, for activation of the pump P1 , using TAL tubes, for the sanitation and washing of the waste.
   2) second phase of reduction to medium size of the waste in the VR compartment always by means of the blades joined to the digital motor MD and consequent further injection of aqueous solution of enzymes, as in the previous point, with further sanitation and washing of the waste;
   3) consequent expulsion from the VR compartment of the liquid used, controlled by the management machine language which opens an EV solenoid valve placed on the TAL tube which through the pump P1 causes the resulting fluid to flow through said TAL tube to the liquid treated tank SLQ and consequently through the TSLQ pipe by means of the drain pump P "in the sewer.
   4) fine reduction, with further grinding, by means of the blades of the MD digital motor, of the waste with further injection of enzymatic liquid, as from previous points, always by hygenization and washing of the waste;
   5) expulsion of the exhausted treatment liquid as in point 3;
   6) insufflation, in compartment VR, of dry hot air by means of the fan V with consequent expulsion of hot moist air always by means of the aspirator A1 which is subsequently treated by the heat pump PDC activating a continuous drying cycle similar to that of a dehumidifier obtaining complete drying of the waste and consequent condensation of the remaining liquid and which, said liquid, is continuously discharged from the collection basin into the slurry tank SLQ through the TSPDC tube. This occurs by means of the movement of the air carried out by an air intake fan V and an air extraction fan A1 which moves the air through the heat pump PDC, through the TA and TV pipes which connect it to the VR compartment with the interposition, in the air path, of an F1 filter;
   7) total expulsion of the treated waste and therefore completely sanitized and dry, by means of an AT actuator, from the primary compartment for the reduction / treatment VR of the waste to be treated to the secondary (removable) storage compartment SR of the treated waste to deliver the treated waste. Said secondary storage tank SR of treated waste will also be provided with an ILSR level indication device highlighted in its operation with LED light on the CPC and CPU control panel, with a TAE ventilation tube which, with the control of an EV solenoid valve, leads to filter F2 and from this with TAF tube, through extractor A2, to the external drain;
   8) expulsion of exhausted liquid from the SLQ tank to the drain of the sink, through the TSLQ pipe, by means of the pump P2, which takes place at the end of the complete cycle of 8 (eight) hours for the five treatment cycles of the five types of waste, thus therefore liquids with particles and deposits are not discharged, but the liquid is pretreated and has ecologically superior characteristics, to that which is expelled by ordinary dishwashers, respecting the environment and reducing the BOD, i.e. it has a lower polluting residue, BOD if compared to the liquid discharged from dishwashers which is not pretreated;
   9) at the weekend or after 7 days the secondary SR compartments are extracted, full of treated waste and ready for reuse, which are the secondary SR compartments for storing the variously treated waste, they are variously colored for their recognition and that of the waste to be sent directly to the bins placed on the street.

### 2) Specific operating procedures for the waste treatment cycle.

### Premise

- The device works in compliance with the following waste treatment phases and these phases are activated synergistically in different ways depending on the type of waste treated.
   Phase 1 - Reduction of the volume of the waste - Reduction of the volume of the waste by means of continuous centrifugal shredding and pulses by means of a digital MD motor which, with the blades connected to it, causes this result
- In this phase, according to the type of reduction that must be obtained, namely: coarse, or medium and therefore fine, the machine program regulates and combines rotation speed, rotation impulses and rotation times. Furthermore, for each waste (excluding wet which has other types of sequences), the programming language of the machine has programmed the sequences of speeds, impulses and rotation times more suitable for each type of waste, obtain in only three steps (coarse-medium-fine) the reduction of the volume of the waste up to 5% of the initial one and the particle size of the waste to a measure of about 1 -2 mm, the blades are sized and shaped for each type cutting and for each type of waste to be treated.
- For the wet and for the wet only there is a different programming of speed sequences, continuous treatment pulses, sanitation and drying, so that the wet waste is gradually brought to the maximum granulometric size of 1/2 mm at the dry state, also called humus.

Phase 2 - Cleaning the waste - Cleaning the waste is obtained by injection, with a pressure jet, by one or more suitable injection nozzles, of water-based washing liquid and enzymes targeted by type and dosage, the liquid of washing that comes from the SLE enzyme liquid tank through the PD metering pump (water + enzymes) through the TPD tube which juts out, through the nozzle, or the nozzles provided, into the primary collection compartment VR, in order to sanitize both the waste that said primary collection compartment VR, and in doing so also to reduce the BOD in the resulting slurry. Only for wet waste is an injection of pure enzymes also provided in the various phases. In this type of phase, depending on the waste and the level of shredding / shredding of the waste (coarse, medium and fine), the machine language program will regulate and combine the amounts of enzymes, water, pressure and rotation time mode, appropriately for the cycle to be performed.

Phase 3 - Waste drying - Waste drying by means of an air recirculation system, with a PDC heat pump and recirculation of treated air in the drying circuit. This drying always depends in its modalities on the type of waste to be treated. The drying phase is managed by the program installed in device D and takes place through the use of a PDC heat pump, precisely the air is sucked through an aspirator A1,through the TA tube, which passes it through the cold coil of the evaporator of the PDC heat pump thus leaving the humidity present in it condensed on said cold coil and from this it will end up through the TSPDC tube collected in a SLQ slurry tank, therefore, the air proceeds through an F1 filter which it purifies from any impurities, after which it passes to the hot coil of the condenser of the PDC heat pump and is heated, and then passes to the primary collection compartment VR always pushed through the TV tube by the recirculation fan V. The condensed part via the TSPDC is emptied into the SLQ slurry tank. The treated air is also continuously purified in the cycle by an F1 filter. The dehumidification circuit is a classic heat pump circuit, consisting of an expansion valve, evaporator, compressor and condenser. The operating cycle of the dehumidifier is continuous until the waste has completely dried.

Phase 4 - Transfer of the treated waste - The waste thus treated as above is transferred, during the rotation of the blades controlled by the digital motor MD, by centrifugation, from the primary collection compartment VR, to the secondary compartment SR for storing waste through the AT actuator. The treated waste (dry-cans-plastic-glass) is presented in the form of a fine grain which has a size, as granulometry, of about 1-2 mm, it will also be clean, dry and ready to be reused after being transferred to the suitable collectors (bins suitable for the purpose); the secondary compartment SR is in any case aerated through the TAB tube which, with the solenoid valve EV, leads to the filter F2.

Phase 5 - Sewage evacuation - The sewage obtained from the treatment of waste, thanks to a suitable mixture of water and enzymes, studied for each type of waste, are treated, within the SLQ slurry tank, for 8 hours to treat and reduce the BOD and consequently the sewage is transferred with a pump P2 through the TSLQ pipe to the sink drain and then to the sewer. It should be noted that all the processing phases are managed by a suitable programmed hardware configuration by inserting a suitable specific program in the machine, also called firmware and / or software that manages each individual waste processing phase. Each type of waste to be treated has specific dedicated programming. The treatment process, in this way, i.e. thanks to the hardware base and its firmware / software it can be managed independently by the waste treatment device D. Device D is equipped with an ICT sensor which prevents the machine from operating if the TP cap is not perfectly placed to close the SR secondary collection compartment. An additional ICSR sensor prevents the process if the secondary collection compartment SR is not perfectly closed. In addition, another IATP indicator / overflow alarm sensor constantly monitors the maximum level of material treated in the SR waste collection compartment. Safety sensors are also provided, such as for example the PE pressure switches that monitor and highlight any overpressures in the tanks, while the ILLQ liquid level indicator and IATP indicator / overflow alarm sensors indicate if the liquids used are in the optimum operating levels.

Each individual treatment compartment is therefore made up of a primary treatment compartment VR for the treatment of device D, it is also equipped with an operating control panel and CPC control LED, which bears a safety and emergency button that stops the individual treatment, equipped with a digital MD motor that will control the shredding blades not indicated because they are suitably shaped for the individual uses with the relative waste, with a secondary SR collection compartment, in addition to it, two additional compartments will be connected to the above treatment compartment, ie a drying compartment and a washing compartment with a mix of water and enzymes, a further fluid / sewage treatment circuit is connected to it which will lower the BOD of the discharged liquids.

The management of the treatment by the device D can be complete and combined for all types of waste with management carried out by the DY display of the LCD panel, or it can be single for type of waste and managed as in the previous paragraphs described.

The complete cycle, i.e. the treatment of all waste, works in sequence so as not to increase energy absorption and the sequence, for example, is as follows: Dry; Tin cans; Plastic; Glass; Humid.

The duration of the phases is programmed so that the complete waste treatment cycle is eight hours and therefore can preferably be carried out overnight.

The partial cycle allows a coarse reduction of the single waste (carried out for example to roughly reduce the volume).

The single cycle allows the treatment of a type of waste of a SR compartment in a complete way (carried out for example for a single extraordinary loading event of a single waste).

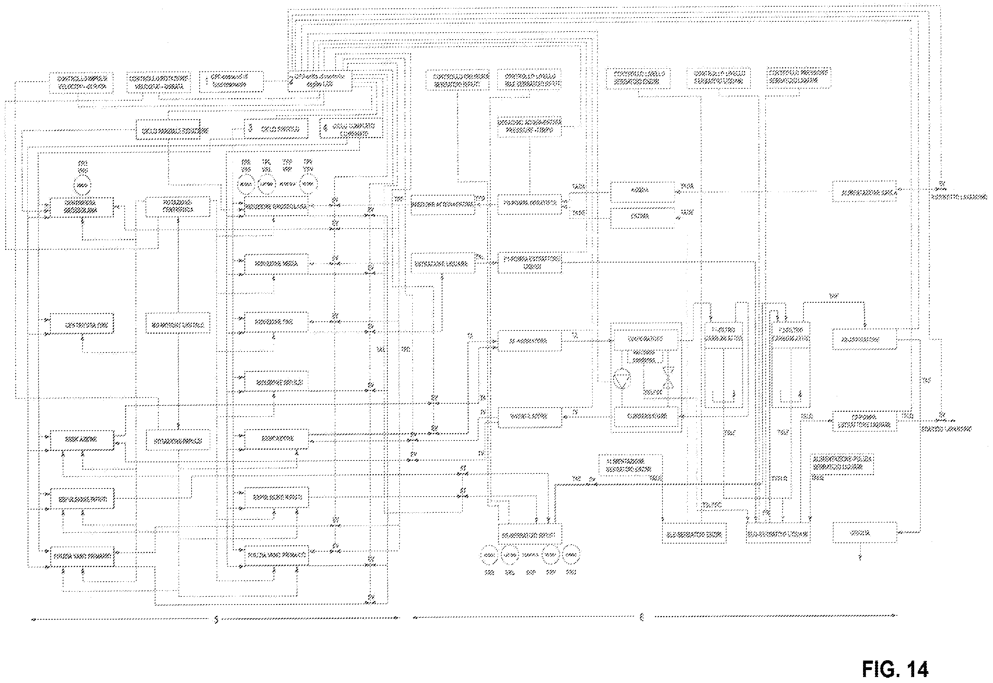

With reference to figure 14, i.e. the block diagram of the operating phases of the device D, it will be noted that there will be two types of commands and related waste treatments (commands), i.e. there is the first command 1 for the treatment single / partial waste, while the second command is 2 for the complete treatment of waste, we also have that the first and second type of waste processing is the partial and single treatment 3, while the second type, total waste treatment, is the complete treatment 4. From these three typologies all the mechanical processing steps of the waste follow, such as shredding, reduction phases, from coarse, to end, etc., they are united in a single block 5, with the exception of drying which appears in the same block 5, but which connects with the accessory operations that refer to block 6 which illustrates the various sewage discharge steps in the sewer, operating cycles of the heat pump for drying, etc..

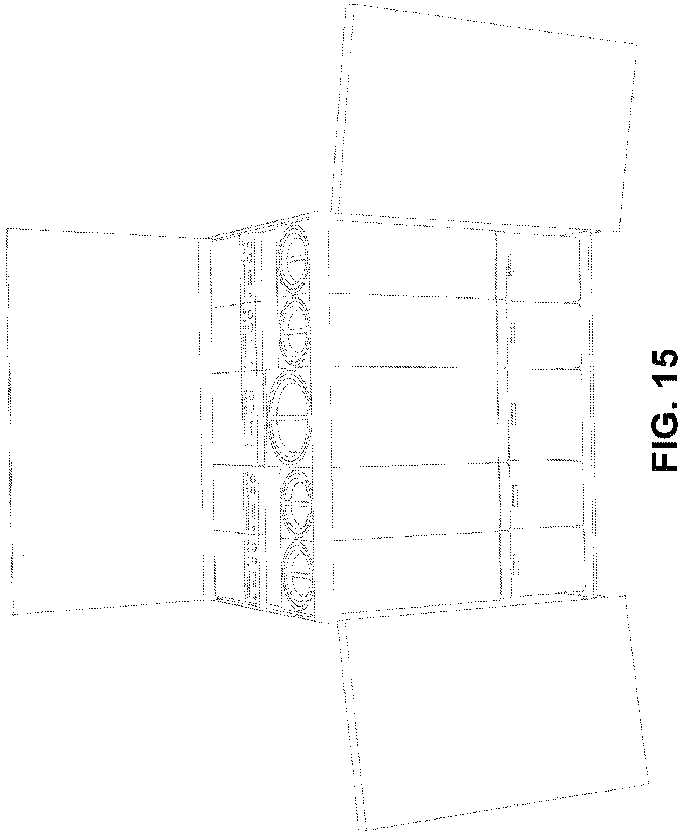

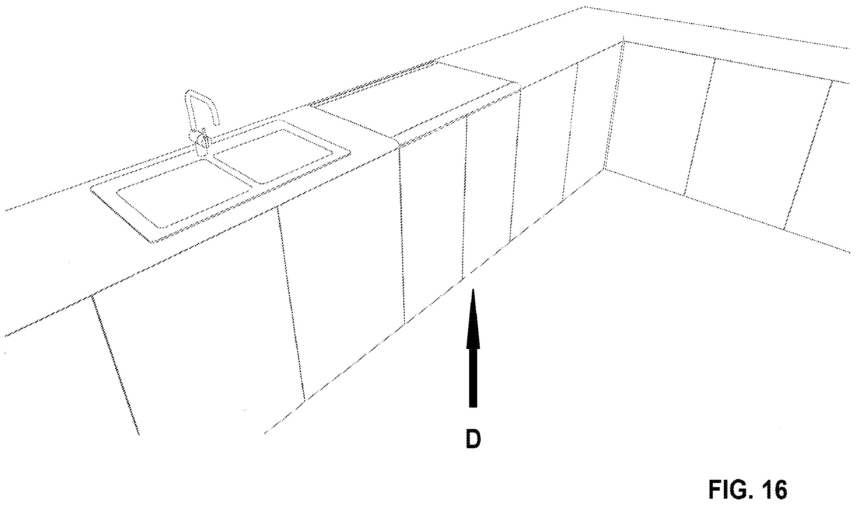

Figures 15 and 16 refer, the first to a perspective front view of the complete device D, with the front closing panels PA, the worktop PL, the caps TP, the LCD display (CY), the operating controls and CPC control led and a cover shelf R, the second instead will show the device D in a composition of furniture constituting a modern kitchen in which it (D) is perfectly inserted without interruption of the furniture in general and placed near the sink for obvious reasons for connection to the sink drain as well as to the water supply.

It should also be noted that device D is connected, clearly, for the supply of energy, to the electricity network, for the supply of water to the water network and for the discharge of processing liquids, or sewage, to the sewage network in the same way and with the same types of connections-feed-drain as a dishwasher. In addition to the above, it should be added that at each processing the device D always operates in any case completely isolated and sealed with respect to the external environment, that all the processing residues are filtered, that the volatile elements are purified by means of a filter, that the liquid ones are treated with lowering of the BOD which is lower than that of ordinary dishwashers (which is not treated at all).

Concluding the defects to date, at the state of the art, of the devices on the market, they are manifold: transfer of intact waste therefore with significant volumes, with organic residues that degrade with consequent unpleasant odors and poor hygiene and healthiness both at home and in the bins of transfer, and much more, in addition to the disposal and processing costs that are high.

The system constituted by the device object of the present invention achieves a better and more rational management of the waste from the moment of domestic treatment until it is delivered to the bins as the device object of the present invention primarily reduces the volumes of waste to be delivered by 90/95%, making them available in a form of thin grains the size of 1/2 mm, it also sanitizes them making them free of any organic residue making them inert from a decomposition point of view.

Add to this that for the first time since separate collections are made, it will no longer be necessary for an average family to make multiple contributions of waste, but only once a week, that the waste will be easy to transport, without problems of foul smelling leaks, involuntary spills, etc., moreover, for the community it will be less expensive to collect for the transfer to the warehouse and no longer to the landfill, as the waste thus treated can be immediately reused for the production of new products without the need for other treatments.

## Claims

1. Device for the complete treatment and recovery of solid urban waste, said device (D) having said device standard dimensions of built-in kitchen appliance, which can be paneled and the upper shelf is completely free of any orifice which is compatible with continuous work surface, moreover, it consists of a first treatment compartment made up of a compartment (VR), called the primary compartment (VR) for reducing and/or treating waste to be treated, being provided with a feeding orifice closed by a cap (TP) which in turn it is connected to safety sensors (ICT) cap closure indicator, said compartment (VR) connects, interiorly to it, to a digital motor (MD) equipped with blades for shredding, which (MD) follows, always below it (MD), a further secondary compartment for treated waste storage (SR); two other compartments are connected to said first compartment, a second for drying and a third for the injection of liquids for washing and sanitation of the waste to be treated: respectively, said second drying treatment compartment basically consisting of a heat pump (PDC), a fan (V), a filter (F1) and a wet air aspirator for waste (A1) interconnected with each other and with the compartment (VR), of the first sector, by means of pipes (TA) and (TV), in addition, said heat pump (PDC) of the second drying treatment compartment will be connected to a heat pump liquid discharge pipe (TSLPDC) which will transfer condensate to the slurry tank (SLQ), while the third compartment basically consists of an enzyme liquid tank (SLE) which, through an enzyme dosing feed tube (TADE) by means of a dosing pump (PD) connected to it (SLE) and to the water network, will mix water and enzymes which will in turn be sent by the pump (PD) to the compartment (VR) of the first compartment, by means of a tube (TPD) for processing and washing and sanitizing treatments of waste, said tube (TPD) being connected to a water doser feeding tube (TADA) and then finished the treatment, the treated liquids being sent to a third compartment, or sucked in by a pump (P1) through the tube (TAL) and spilled into the slurry tank (SLQ), consequently the slurry spilled from the above compartments, the first drying and the second sanitizing and washing, in the slurry tank (SLQ) through the pump (P2) will be treated with lowering of the BOD and will go to the sewer drain, the device (D) being connected to the network electricity, water and sewage as a common household appliance.

2. Device according to claim 1 **characterized in that** the waste is shredded and/or reduced in volume and completely sanitized in the compartment (VR), consequently it is expelled from it (VR) completely reduced by 90% -95% from its original volume in a secondary compartment (SR) and treatment by-products (sewage) will be treated to reduce BOD and that the treated sewage will be free of coarse particles in suspension and that they will be expelled into the sewer pipe.

3. Device according to claim 1 being further equipped with a second filter (F2) for the filtration of odors/fumes and/or polluted air from the tank (SLQ) or from the treatment coming from the compartment (VR) by means of the pipes (TAE) and also equipped with safety elements and systems such as: a pressure switch (PR); an enzyme level indicator (ILE); a liquid level indicator (ILLQ); an overflow indicator/alarm (I ATP); a cap closure indicator (ICT); a waste tank level indicator (ILSR); a waste tank closing indicator (ICSR).

4. Device (D) according to the preceding claims, **characterized in that** the waste treated in the compartment (VR), consequently sent to the secondary compartment (SR) therefore exiting towards the bin, is perfectly treated and suitable for its recycling directly without further treatments.

5. Device according to claim 1 **characterized in that** it is provided with a suitable machine language which is managed by a display (DY) by means of an LCD screen connected to a central processing and control unit (CPU) not indicated in the figures, which it supervises complete waste treatment cycles and an operating command panel and control LED (CPC) provided for each individual type of waste in order to create a single, partial and complete waste treatment cycle.

6. Device according to the preceding claims, **characterized in that** the waste is sanitized through enzymes used for the treatment of washing and sanitizing of the waste will be specifically dosed at each stage for each single type of waste to be treated.

7. Device according to the preceding claims, **characterized in that** the caps (TP) and the secondary compartment for treating waste (SR) are colored differently in order to identify, with a color coding, the types of waste to be introduced into the compartment (VR ) closed by the caps (TP) of the device (D) and consequently continue the color coding from the secondary compartment of the treated waste (SR) to the bin.

8. Device according to the preceding claims, **characterized in that** it (D) is completely isolated from the external environment during waste treatment, but which is in any case connected to the water, electricity and sewage network.

## Patentansprüche

1. Vorrichtung zur vollständigen Behandlung und Rückgewinnung von festen Siedlungsabfällen, wobei die Vorrichtung (D) die Standardabmessungen eines eingebauten Küchengerätes hat, paneeliert sein kann, und die obere Platte vollständig frei von jeglicher Öffnung ist und mit einer kontinuierlichen Arbeitsfläche kompatibel ist, ferner aus einem ersten Behandlungsraum besteht, der aus einem Raum (VR) zusammengesetzt ist, der Primärraum (VR) genannt ist, zum Reduzieren und/oder zum Behandeln von Abfällen, die behandelt werden sollen, der mit einer Zuführöffnung versehen ist, die von einem Stopfen (TP) geschlossen ist, der seinerseits mit Sicherheitssensoren (ICT) verbunden ist, die den Stopfenverschluß anzeigen, wobei der Raum (VR) sich, im Inneren, mit einem digitalen Motor (MD) verbindet, der mit Blättern zur Zerkleinerung ausgestattet ist, welchem (MD), immer darunter (MD), ein weiterer Sekundärraum zur Lagerung von behandelten Abfällen (SR) folgt; zwei weitere Räume mit dem ersten Raum verbunden sind, ein zweiter zur Trocknung und ein dritter für die Einspritzung von Flüssigkeiten zum Waschen und zur Hygienisierung der Abfälle, die behandelt werden sollen: und zwar, der zweite Trocknungsbehandlungsraum im Wesentlichen aus einer Wärmepumpe (PDC), einem Lüfter (V), einem Filter (F1) und einem Abfallnassluft-Absauger (A1) besteht, die miteinander und mit dem Raum (VR), des ersten Bereichs, mittels Rohre (TA) und (TV) verbunden sind, darüber hinaus die Wärmepumpe (PDC) des zweiten Trocknungsbehandlungsraums mit einem Wärmepumpe-Flüssigkeitsabflussrohr (TSLPDC) verbunden sein wird, das dem Schlammtank (SLQ) das Kondensat liefern wird, während der dritte Raum im Wesentlichen aus einem Enzymflüssigkeitstank (SLE) besteht, der, durch ein Enzymdosierzuführrohr (TADE) mittels einer Dosierpumpe (PD), die mit ihm (SLE) und mit dem Wassernetz verbunden ist, Wasser und Enzyme mischen wird, die ihrerseits von der Pumpe (PD) an den Raum (VR) des ersten Raums, mittels eines Rohres (TPD) zu Aufbereitungs- und Wasch- und Hygienisierungsbehandlungen von Abfällen, gesandt werden sollen, wobei das Rohr (TPD) mit einem Wasserdosierzuführrohr (TADA) verbunden ist, und dann, nachdem die Behandlung beendet ist, die behandelten Flüssigkeiten einem dritten Raum gesandt werden, oder von einer Pumpe (P1) durch das Rohr (TAL) angesaugt und in den Schlammtank (SLQ) gegossen werden, daraufhin der Schlamm, der aus den obigen Räumen, dem ersten Trockenraum und dem zweiten Hygienisier- und Waschraum, in den Schlammtank (SLQ) durch die Pumpe (P2) gegossen wird, mit Absenkung des BOD behandelt werden wird und zum Abwasserkanal laufen wird, wobei die Vorrichtung (D) mit der Netzelektrizität, mit Wasser und Abwasser als ein übliches Haushaltsgerät verbunden ist.

2. Vorrichtung nach Anspruch 1, **dadurch gekennzeichnet, dass** die Abfälle zerkleinert und/oder hinsichtlich ihres Volumens reduziert und im Raum (VR) vollständig hygienisiert werden, folglich davon (VR) vollständig um 90% - 95% von ihrem ursprünglichen Volumen in einen Sekundärraum (SR) ausgestoßen werden und Behandlungsnachprodukte (Abwässer) behandelt werden, um den BOD zu reduzieren, und dass die behandelten Abwässer von groben Teilchen in Suspension frei sein werden und dass sie in das Abwasserrohr ausgestoßen werden.

3. Vorrichtung nach Anspruch 1, die ferner mit einem zweiten Filter (F2) für die Filtration von Gerüchen/Dämpfen und/oder von verschmutzter Luft aus dem Tank (SLQ) oder aus der Behandlung, die vom Raum (VR) mittels der Rohre (TAE) kommt, versehen ist, und auch mit Sicherheitselementen und -systemen versehen ist, wie: einem Druckschalter (PR); einem Enzymmengenanzeiger (ILE); einem Flüssigkeitsstandanzeiger (ILLQ); einem Überlaufanzeiger/Alarm (I ATP); einem Stopfenverschlußanzeiger (ICT); einem Abfalltankstandanzeiger (ILSR); einem Abfalltankschließungsanzeiger (ICSR).

4. Vorrichtung (D) nach den vorhergehenden Ansprüchen, **dadurch gekennzeichnet, dass** die Abfälle, die im Raum (VR) behandelt werden, folglich dem Sekundärraum (SR) gesandt werden, daher zum Behälter hin austreten, vollkommen behandelt sind und für ihr Recycling direkt, ohne weitere Behandlungen, geeignet sind.

5. Vorrichtung nach Anspruch 1, **dadurch gekennzeichnet, dass** sie mit einer geeigneten Maschinensprache, die von einer Anzeige (DY) mittels eines LCD-Bildschirmes verwaltet wird, der mit einer zentralen Verarbeitungs- und Steuerungseinheit (CPU), die in den Figuren nicht angezeigt ist, verbunden ist, die komplette Abfallbehandlungszyklen überwacht, und mit einem Panel für die Betriebsbefehle und die Steuerungs-LED (CPC), das für jeden individuellen Typ von Abfall vorgesehen ist, um einen einzigen, teilweisen und kompletten Abfallbehandlungszyklus zu schaffen, ausgestattet ist.

6. Vorrichtung nach den vorhergehenden Ansprüchen, **dadurch gekennzeichnet, dass** die Abfälle durch Enzyme, die für die Waschbehandlung benutzt werden, hygienisiert werden und die Hygienisierung der Abfälle in jeder Phase für jeden einzelnen Typ von Abfällen, die behandelt werden sollen, spezifisch dosiert werden wird.

7. Vorrichtung nach den vorhergehenden Ansprüchen, **dadurch gekennzeichnet, dass** die Stopfen (TP) und der Sekundärraum zur Behandlung der Abfälle (SR) unterschiedlich gefärbt sind, um, mit einer Farbcodierung, die Type von Abfällen, die in den Raum (VR) eingeführt werden sollen, der von den Stopfen (TP) der Vorrichtung (D) geschlossen ist, zu identifizieren und demzufolge die Farbcodierung von dem Sekundärraum der behandelten Abfälle (SR) zum Behälter weiterzuführen.

8. Vorrichtung nach den vorhergehenden Ansprüchen, **dadurch gekennzeichnet, dass** sie (D) von der äußeren Umgebung während der Abfallbehandlung völlig isoliert ist, aber in jedem Fall mit dem Wasser-, Elektrizitäts- und Kanalisationsnetz verbunden ist.

## Revendications

1. Dispositif pour le traitement complet et la récupération des déchets urbains solides, ledit dispositif (D) ayant lesdites dimensions standard de l'appareil de cuisine intégré, qui peut être lambrissé et l'étagère supérieure est complètement exempte de tout orifice compatible avec une surface de travail continue, de plus, il se compose d'un premier compartiment de traitement composé d'un compartiment (VR), appelé compartiment primaire (VR) pour la réduction et/ou le traitement des déchets à traiter, étant muni d'un orifice d'alimentation fermé par un bouchon (TP) qui à son tour est connecté à des capteurs de sécurité (TIC) indicateur de fermeture de bouchon, ledit compartiment (VR) se connecte, à l'intérieur de celui-ci, à un moteur numérique (MD) équipé de lames pour le déchiquetage, qui (MD) suit, toujours en dessous de lui (MD), un autre compartiment secondaire pour le stockage des déchets traités (SR) ; deux autres compartiments sont connectés audit premier compartiment, un deuxième pour le séchage et un troisième pour l'injection de liquides pour le lavage et l'assainissement des déchets à traiter: respectivement, ledit deuxième compartiment de traitement de séchage consiste essentiellement en une chaleur pompe (PDC), un ventilateur (V), un filtre (F1) et un aspirateur d'air humide pour les déchets (A1) interconnectés entre eux et avec le compartiment (VR), du premier secteur, au moyen de tuyaux (TA) et (TV), en outre, ladite pompe à chaleur (PDC) du deuxième compartiment de traitement de séchage sera connectée à un tuyau de décharge de liquide de pompe à chaleur (TSLPDC) qui transférera le condensat au réservoir de boue (SLQ), tandis que le troisième compartiment consiste essentiellement en un réservoir de liquide enzymatique (SLE) qui, à travers un tube d'alimentation de dosage d'enzymes (TADE) au moyen d'une pompe de dosage (PD) connectée à celui-ci (SLE) et au réseau d'eau, mélangera de l'eau et des enzymes qui seront à leur tour envoyées par la pompe (PD) au compartiment (VR) du premier compartiment, au moyen d'un tube (TPD) pour le traitement et le lavage et les traitements d'assainissement des déchets, ledit tube (TPD) étant connecté à un tube d'alimentation de dosage d'eau (TADA) puis terminant le traitement, les liquides traités étant envoyés à un troisième compartiment, ou aspirés par une pompe (P1) à travers le tube (TAL) et déversé dans le réservoir de boue (SLQ), par conséquent, la boue déversée des compartiments ci-dessus, le premier séchage et le second assainissement et lavage, dans le réservoir de boue (SLQ) à travers la pompe (P2) seront traités avec abaissement de la DBO et iront à la vidange des égouts, le dispositif (D) étant connecté au réseau d'électricité, d'eau et d'eaux usées comme un appareil ménager commun.

2. Dispositif selon la revendication 1, **caractérisé en ce que** les déchets sont déchiquetés et/ou réduits en volume et complètement désinfectés dans le compartiment (VR), en conséquence, ils en sont expulsés complètement réduits de 90% à 95% de leur volume d'origine dans un compartiment secondaire (SR) et les sous-produits de traitement (eaux usées) seront traités pour réduire la DBO et que les eaux usées traitées seront exemptes de particules grossières en suspension et qu'elles seront expulsées dans le tuyau d'égout.

3. Dispositif selon la revendication 1 étant en outre équipé d'un second filtre (F2) pour la filtration des odeurs/fumées et/ou de l'air pollué provenant du réservoir (SLQ) ou du traitement provenant du compartiment (VR) au moyen des tuyaux (TAE) et également équipé d'éléments et de systèmes de sécurité tels que : un pressostat (PR) ; un indicateur de niveau d'enzyme (ILE) ; un indicateur de niveau de liquide (ILLQ) ; un indicateur/alarme de débordement (I ATP) ; un indicateur de fermeture de bouchon (ICT) ; un indicateur de niveau de réservoir de déchets (ILSR) ; un indicateur de fermeture de réservoir de déchets (ICSR).

4. Dispositif (D) selon les revendications précédentes, **caractérisé en ce que** les déchets traités dans le compartiment (VR), par conséquent envoyés dans le compartiment secondaire (SR) sortant donc vers la poubelle, sont parfaitement traités et adaptés à leur recyclage directement sans autres traitements.

5. Dispositif selon la revendication 1, **caractérisé en ce qu'**il est doté d'un langage machine approprié qui est géré par un affichage (DY) au moyen d'un écran LCD connecté à une unité centrale de traitement et de commande (CPU) non indiquée sur les figures, qu'il supervise des cycles complets de traitement des déchets et un panneau de commande de fonctionnement et une LED de commande (CPC) prévus pour chaque type individuel de déchets afin de créer un cycle de traitement des déchets unique, partiel et complet.

6. Dispositif selon les revendications précédentes, **caractérisé en ce que** les déchets sont désinfectés par des enzymes utilisées pour le traitement du lavage et de la désinfection des déchets seront spécifiquement dosés à chaque étape pour chaque type de déchets à traiter.

7. Dispositif selon les revendications précédentes, **caractérisé en ce que** les bouchons (TP) et le compartiment secondaire de traitement des déchets (SR) sont colorés différemment afin d'identifier, avec un codage couleur, les types de déchets à introduire dans le compartiment (VR) fermé par les bouchons (TP) du dispositif (D) et par conséquent de poursuivre le codage couleur du compartiment secondaire des déchets traités (SR) à la poubelle.

8. Dispositif selon les revendications précédentes, **caractérisé en ce qu'**il (D) est complètement isolé de l'environnement extérieur lors du traitement des déchets, mais qui est en tout état de cause relié au réseau d'eau, d'électricité et d'égouts.
